# EUROPÄISCHE PATENTSCHRIFT

(11) **EP 3 354 804 B1**
(45) Veröffentlichungstag und Bekanntmachung des Hinweises auf die Patenterteilung: **06.05.2020**
(21) Anmeldenummer: 17001855.0
(22) Anmeldetag: 13.11.2017
(51) Int. Cl.: E03C 1/04, F16K 11/00

(54) **SCHLAUCHANSCHLUSSANORDNUNG, VERWENDUNG EINER SCHLAUCHANSCHLUSSANORDNUNG UND SANITÄRARMATUR**
HOSE CONNECTION ARRANGEMENT, USE OF A HOSE CONNECTION ARRANGEMENT AND SANITARY FITTING
DISPOSITIF DE RACCORD DE TUYAU, UTILISATION D'UN DISPOSITIF DE RACCORD DE TUYAU ET ARMATURE SANITAIRE

(30) Priorität: 26.01.2017 DE 202017100423 U
(43) Veröffentlichungstag der Anmeldung: 01.08.2018
(73) Patentinhaber: Neoperl GmbH, 79379 Müllheim (DE)
(72) Erfinder: Stein, Alexander, 79241 Ihringen (DE); Oechsle, Daniel, 79379 Müllheim (DE)
(74) Vertreter: Börjes-Pestalozza, Henrich

(56) Entgegenhaltungen:
- EP-A1- 3 109 521
- EP-A2- 2 497 866

## Beschreibung

Die Erfindung betrifft eine Schlauchanschlussanordnung, mit einem Mündungsteil, mit einem Grundkörper, an welchem wenigstens zwei Schlauchaufnahmen ausgebildet sind, mit wenigstens zwei Schläuchen, die mit ihren jeweiligen Enden in jeweils eine der wenigstens zwei Schlauchaufnahmen gesteckt sind, wobei an jedem der wenigstens zwei Schläuche eine Haltekante ausgebildet ist, mit einer Halteplatte, in welcher korrespondierend zu den wenigstens zwei Schlauchaufnahmen wenigstens zwei Ausnehmungen ausgebildet sind, in welche jeweils eine der wenigstens zwei Schläuche durch eine quer zur einer Längsrichtung des jeweiligen Schlauchs ausgerichtete Einsetzbewegung einsetzbar ist, so dass die zugehörige Haltekante die Halteplatte übergreift, um ein Abziehen der Schläuche aus der Schlauchaufnahme zu verhindern.

Die Erfindung betrifft weiter eine Verwendung einer Schlauchanschlussanordnung bei einer Sanitärarmatur.

Die Erfindung betrifft schließlich eine Sanitärarmatur.

Es ist bekannt, bei Sanitärarmaturen unterschiedliche Komponenten, insbesondere Einbaukomponenten, mit Anschlussschläuchen : zu versehen. Derartige Komponenten können beispielsweise Mischventile oder Mischkartuschen, sonstige: Ventile oder auch sanitäre Auslaufteile sein. Bei derartigen Schlauchanschlüssen besteht generell die Anforderung, einen dichten Anschluss dauerhaft herzustellen. Dies beinhaltet auch eine ausreichende Stabilität gegenüber mechanischen Belastungen, insbesondere Zugbelastungen an den jeweiligen Schläuchen.

Hierzu ist es üblich geworden, die Schläuche mit einem Gewinde zu versehen, welches in eine entsprechende Schlauchaufnahme eingeschraubt wird. Dies hat sich jedoch als aufwändig bei der Fertigung erwiesen.

Die EP 2 497 866 A2 betrifft eine Küchenarmatur mit einem Batteriekörper und mit einem um den Batteriekörper drehbar angeordneten, einen fest damit verbundenen Wasserauslauf aufweisenden Armaturengehäuse, wobei im Inneren des Armaturen-gehäuses eine an Zulaufrohre für das kalte und das warme Wasser angeschlossene Mischkartusche angeordnet ist und ein an einem an der Mischkartusche angeordneten Stellhebel angeschlossener Griffhebel zur Einstellung von Menge und Temperatur des über die Kartusche geführten und aus der an dem Wasserauslauf angeordneten Austrittsöffnung austretenden Mischwassers vorgesehen ist.

Die EP 3 109 521 A1 betrifft eine Ventilgehäuseanordnung mit einem Schlauchan-schluss, durch welchen wenigstens zwei Schläuche an die Ventilgehäuseanordnung anschließbar sind.

Der Erfindung liegt die Aufgabe zugrunde, die Montage einer derartigen Schlauchanschlussanordnung zu vereinfachen.

Erfindungsgemäß sind zur Lösung der Aufgabe die Merkmale von Anspruch 1 vorgesehen. Somit wird erfindungsgemäß zur Lösung der genannten Aufgabe bei einer Schlauchanschlussanordnung der eingangs beschriebenen Art vorgeschlagen, dass an dem an dem Grundkörper abströmseitig angesetzten Mündungsteil ein Anschlag ausgebildet ist, mittels welchem der Grundkörper mit einer Schraubhülse gegen die durch ein Widerlager abstützbare oder in Gebraudistellung von außen abgestützte Halteplatte pressbar ist. Somit ist ein eingesetzter Schlauch, dessen Haltekante zwischen der Halteplatte und dem Grundkörper ausgebildet ist, durch einfache Maßnahmen an einer aufnehmenden Sanitärarmatur sicher zwischen der Halteplatte und dem Grundkörper haltbar. Die Erfindung ermöglicht es somit, die Halteplatte in einer aufnehmenden Sanitärarmatur in feste Relativposition zu dem Grundkörper zu halten, wodurch ein sicherer Anschluss des Schlauches erreichbar ist, der auch mechanischen Zugbelastungen standhält.

Die Erfindung hat den weiteren Vorteil, dass die Schläuche in die Schlauchaufnahmen in unterschiedlicher Orientierung einsteckbar sind. Dies kann eine Torsionsbelastung der Schläuche verringern oder beseitigen.

Bevorzugt ist die Halteplatte scheibenförmig ausgebildet.

Bei einer vorteilhaften Ausgestaltung ist vorgesehen, dass der Anschlag als umlaufende Schulter ausgebildet ist. Von Vorteil ist dabei, dass eine Fixierung an der Halteplatte unabhängig von einer Orientierung, in welcher der jeweilige Schlauch in die gehörige Schlauchaufnahme eingesteckt wird, ermöglicht ist.

Bei einer weiteren Ausgestaltung ist vorgeschlagen, dass in dem Grundkörper eine dritte Schlauchaufnahme ausgebildet ist, dass ein dritter Schlauch mit seinem Ende in die dritte Schlauchaufnahme gesteckt ist, dass an dem dritten Schlauch eine Haltekante ausgebildet ist, dass in der Halteplatte korrespondierend zu der dritten Schlauchaufnahme eine Ausnehmung ausgebildet ist, in welcher der dritte Schlauch durch eine quer zu einer Längsrichtung des dritten Schlauchs ausgerichtete Einsetzbewegung einsetzbar ist, so dass die zugehörige Haltekante die Halteplatte übergreift, um ein Abziehen des Schlauchs aus der Schlauchaufnahme zu verhindern. Die Erfindung ermöglicht somit die gemeinsame axiale Fixierung von drei Schläuchen mit einer gemeinsamen Halteplatte. Dies erleichtert die Montage.

Die drei Schläuche können hierbei beispielsweise für die Zuführung von Kaltwasser und Warmwasser und die Abführung von Mischwasser nutzbar sein, wie dies bei Mischventilen oder Mischkartuschen der Fall ist. Alternativ oder zusätzlich können die drei Schläuche auch für die Zuleitung von unterschiedlichen Flüssigkeiten zu einem gemeinsamen sanitären Auslaufstück verwendbar sein.

Bei einer weiteren Ausgestaltung wird vorgeschlagen, dass der Grundkörper mit einer Schraubhülse gegen die von außen abgestützte Halteplatte pressbar ist. Dies ist besonders dann günstig, wenn der Grundkörper zu einem sanitären Auslaufteil gehört, welches beispielsweise in einem Armaturenauslauf einsetzbar ist. Die Möglichkeit, die Fixierung der Halteplatte an dem Grundkörper über eine ohnehin erforderliche Schraubhülse, beispielsweise das Auslaufmundstück, zu erreichen, vereinfacht den Montageaufwand.

Insbesondere kann hierbei vorgesehen sein, dass der Grundkörper mit der Schraubhülse über einen Anschlag, beispielsweise den bereits erwähnten Anschlag, an einem an dem Grundkörper abströmseitig angesetzten Mündungsteil, beispielsweise dem bereits erwähnten Mündungsteil, pressbar ist. Die wenigstens zweiteilige Ausführung mit einem Grundkörper und einem Mündungsteil hat den Vorteil, dass somit komplexere Innengeometrien an Grundkörper und Mündungsteil ausbildbar sind, die beispielsweise an einer geöffneten Verbindungsstelle, an der Grundkörper und Mündungsteil im Gebrauch zusammengesetzt sind, zugänglich sind.

Bei einer vorteilhaften Ausgestaltung kann vorgesehen sein, dass die Schraubhülse als Auslaufmundstück ausgebildet ist. Es ist somit ein Standardteil einer Sanitärarmatur zur Befestigung der Schläuche nutzbar.

Bei einer vorteilhaften Ausgestaltung kann vorgesehen sein, dass ein Auslaufmundstück, insbesondere das bereits erwähnte Auslaufmundstück, auf das Mündungsteil aufgesetzt ist, welches an dem Anschlag anliegt. Somit ist ein einfaches Mittel beschrieben, wie eine Anpresskraft des Grundkörpers auf die Halteplatte erzeugbar ist. Mit dem Auslaufmundstück ist hierbei ein Standardteil einer Sanitärarmatur nutzbar.

Bei einer vorteilhaften Ausgestaltung kann vorgesehen sein, dass die wenigstens zwei Ausnehmungen mit ihren Öffnungen voneinander weg weisen. Somit sind die Schläuche aus unterschiedlichen Richtungen einsetzbar. Dies ist besonders günstig, um die Schläuche nacheinander einzusetzen. Bei drei Ausnehmungen kann somit vorgesehen sein, dass die Ausnehmungen paarweise voneinander weg weisen. Hierbei kann vorgesehen sein, dass die Öffnungen beabstandet voneinander an einer Umfangskontur der Halteplatte nach außen münden. Hierdurch kann eine besonders einfach, beispielsweise durch Stanzen, herstellbar Halteplatte verwendet werden.

Bei einer vorteilhaften Ausgestaltung kann vorgesehen sein, dass die wenigstens zwei Ausnehmungen in eine gemeinsame zentrale Durchstecköffnung der Halteplatte münden. Besonders günstig ist es, wenn die Halteplatte die Durchstecköffnung ringförmig umlaufend einfasst. Somit ist eine nach außen geschlossene Halteplatte bildbar. Die Halteplatte ist somit mit einer erhöhten Stabilität gegen mechanische Beanspruchungen herstellbar. Es sind sogar drei oder mehr Ausnehmungen ausbildbar, die jeweils einen Schlauch aufnehmen können.

Bei einer vorteilhaften Ausgestaltung kann vorgesehen sein, dass an jedem der wenigstens zwei Schläuche ein Dichtring angeordnet ist, welcher den jeweiligen Schlauch in der jeweiligen Schlauchaufnahme abdichtet. Zusätzliche Sicherungsmittel sind somit verzichtbar. Die Dichtringe sind beispielsweise am jeweiligen Schlauch vormontierbar. Diese Anordnung ist auch auf drei Schläuche übertragbar, wobei beispielsweise jedes Paar von Schläuchen der drei Schläuche wie beschrieben ausgestaltet sein kann.

Es kann auch vorgesehen sein, dass in jeder der wenigstens zwei oder drei Schlauchaufnahmen ein Dichtring angeordnet ist, welcher den jeweiligen Schlauch in der jeweiligen Schlauchaufnahme abdichtet. Zusätzliche Sicherungsmittel sind somit verzichtbar. Die Dichtringe sind beispielsweise in der jeweiligen Schlauchaufnahme vormontierbar.

Bei einer vorteilhaften Ausgestaltung kann vorgesehen sein, dass die Haltekanten jeweils als Teil einer umlaufenden Haltenut ausgebildet sind. Es ist somit eine axiale Sicherung der Schläuche in beiden Richtungssinnen, also gegen ein unbeabsichtigtes Herausziehen aus der jeweiligen Schlauchaufnahme und gegen eine ungewollte Druckbeaufschlagung in die Schlauchaufnahme hinein, erreichbar. Die Schläuche sind außerdem durch Einlegen in die jeweiligen Ausnehmungen axial an der Halteplatte fixierbar, bevor sie in die jeweiligen Schlauchaufnahmen gesteckt werden.

Bei einer vorteilhaften Ausgestaltung kann vorgesehen sein, dass zwischen dem Mündungsteil und dem Grundkörper ein Dichtring angeordnet ist. Somit ist eine von dem Mündungsteil und dem Grundkörper eingeschlossene Innengeometrie nach außen abdichtbar.

Bei einer vorteilhaften Ausgestaltung kann vorgesehen sein, dass der Grundkörper wenigstens eine im Wesentlichen punktförmige Schlauchaufnahme mit einer ringförmigen oder C-förmigen Abgabeöffnung auf seiner von den wenigstens zwei, vorzugsweise drei, Schlauchaufnahmen abgewandten Seite flüssigkeitsführend verbindet. Es sind somit nebeneinander angeordnete Wasserströme, die durch die einzelnen Schläuche beschrieben sind, in eine konzentrische Anordnung von Wasserströmen einfach wandelbar. Es ist somit ein gefälliges oder ansprechendes Strahlbild erzeugbar, bei dem beispielsweise in einem Zentrum Wasserstrahlen verborgen austreten können.

Bei einer vorteilhaften Ausgestaltung kann vorgesehen sein, dass der Grundkörper wenigstens eine der wenigstens zwei Schlauchaufnahmen mit einer Abgabeöffnung auf seiner von den wenigstens zwei Schlauchaufnahmen abgewandten Seite flüssigkeitsführend verbindet. Bevorzugt sind drei Schlauchaufnahmen für drei Schläuche ausgebildet.

Bei einer vorteilhaften Ausgestaltung kann vorgesehen sein, dass das Mündungsteil als Strahlformer- und/oder Strahlreglereinheit ausgebildet ist. Besonders günstig ist es hierbei, wenn wenigstens eine, vorzugsweise zwei, der wenigstens zwei oder drei Schlauchaufnahmen im Grundkörper auf einen Bypass geführt ist/sind. Somit ist ein Auslass für eine Flüssigkeit bildbar, die beispielsweise in geringeren Durchflussmengen bereitgestellt wird, so dass eine Durchflussmengenbegrenzung und/oder eine Strahlformung oder Strahlbelüftung wirkungslos und/oder unerwünscht ist.

Zur Lösung der genannten Aufgabe sind weiter erfindungsgemäß die Merkmale des nebengeordneten, auf eine Verwendung gerichteten Anspruchs vorgesehen. Insbesondere wird somit zur Lösung der genannten Aufgabe erfindungsgemäß eine Verwendung einer erfindungsgemäßen Schlauchanschlussanordnung, insbesondere einer Schlauchanschlussanordnung gemäß der vorangegangenen Beschreibung und/oder nach einem der auf eine Schlauchanschlussanordnung gerichteten Ansprüche, bei einer Sanitärarmatur vorgeschlagen, bei der die wenigstens zwei Schläuche in die Halteplatte seitlich eingesetzt werden, die wenigstens zwei Schläuche anschließend in die jeweilige Schlauchaufnahme eingeführt werden, der Grundkörper in einen Armaturenauslauf der Sanitärarmatur eingesetzt wird und die Halteplatte mit einem an dem Anschlag angreifenden Auslaufmundstück gegen eine im Armaturenauslauf ausgebildete Abstützung gepresst wird. Somit ergibt sich eine einfache Montage, die sogar praktisch werkzeuglos durchführbar ist.

Besonders günstig ist es hierbei, wenn drei Schläuche vorhanden sind, zu denen drei Schlauchaufnahmen am Grundkörper und drei Ausnehmungen an der Halteplatte korrespondieren.

Bei einer vorteilhaften Ausgestaltung kann vorgesehen sein, dass die Abstützung an dem Auslaufmundstück einstückig angeformt ist. Somit ist eine Teilevielfalt reduzierbar.

Es kann auch vorgesehen sein, dass die Abstützung durch ein Einsetzteil gebildet ist. Das Einsetzteil kann beispielsweise ein Sprengring sein. Dies ist einfach montierbar.

Bei einer vorteilhaften Ausgestaltung kann vorgesehen sein, dass das Auslaufmundstück das Mündungsteil gegen den Grundkörper presst. Von Vorteil ist dabei, dass das Auslaufmundstück den Grundkörper in seiner Position und gleichzeitig Grundkörper und Halteplatte relativ zueinander fixiert halten kann. Somit ist eine Anzahl von Fertigungs- und Montageschritten reduzierbar.

Alternativ oder zusätzlich kann vorgesehen sein, dass das Auslaufmundstück mit dem Armaturenauslauf verschraubt wird. Eine Schraubverbindung stellt ein einfaches und belastbares Verbindungsmittel dar.

Bei einer vorteilhaften Ausgestaltung kann vorgesehen sein, dass die Halteplatte drei Ausnehmungen aufweist, in welche jeweils ein Schlauch durch eine quer zu einer Längsrichtung des jeweiligen Schlauchs ausgerichtete Einsetzbewegung eingesetzt wird und wobei anschließend die Schläuche in einen Grundkörper, an welchem drei korrespondierende Schlauchaufnahmen ausgebildet sind, eingesetzt werden. Es sind somit vielfältige Anwendungen realisierbar, beispielsweise die Zuführung von Heiß-, Kalt- und Mischwasser oder reinen und mit Zusätzen versehenen Wässern.

Zur Lösung der genannten Aufgabe sind schließlich die Merkmale des nebengeordneten, auf eine Sanitärarmatur gerichteten Anspruchs vorgesehen. Insbesondere wird somit bei einer Sanitärarmatur erfindungsgemäß vorgeschlagen, dass die Sanitärarmatur durch eine erfindungsgemäße Verwendung, insbesondere wie zuvor beschrieben und/oder nach einem der auf eine Verwendung gerichteten Ansprüche, gebildet ist. Es ist somit eine einfach montierbare Sanitärarmatur bereitstellbar.

Alternativ oder zusätzlich kann somit vorgesehen sein, dass die Sanitärarmatur an einem Armaturenauslauf eine erfindungsgemäße Schlauchanschlussanordnung, insbesondere wie zuvor beschrieben und/oder nach einem der auf eine Schlauchanschlussanordnung gerichteten Ansprüche, aufweist. Die erfindungsgemäße Schlauchanschlussanordnung findet somit einen bevorzugten Anwendungsfall.

Die Erfindung wird nun anhand von Ausführungsbeispielen näher beschrieben, ist aber nicht auf diese Ausführungsbeispiele beschränkt.

Es zeigt:
- Fig. 1: eine erfindungsgemäße Schlauchanschlussanordnung in einer Explosionsdarstellung mit Blick auf die Einlaufseite,
- Fig. 2: die Schlauchanschlussanordnung gemäß Figur 1 in einer Explosionsdarstellung mit Blick auf die Auslaufseite,
- Fig. 3: eine Ansicht auf die Einlaufseite der Schlauchanschlussanordnung nach Figur 1,
- Fig. 4: einen Längsschnitt entlang der Schnittebene in Figur 3,
- Fig. 5: eine Ansicht gemäß Figur 3 mit einer weiteren Schnittebene,
- Fig. 6: einen Längsschnitt entlang der Schnittebene aus Figur 5,
- Fig. 7: eine Draufsicht auf die Halteplatte der Schlauchanschlussanordnung nach Figur 1,
- Fig. 8: eine dreidimensionale Schrägansicht auf die Halteplatte auf Figur 1 mit eingesetzten Schläuchen,
- Fig. 9: eine dreidimensionale Schrägansicht auf den Grundkörper der Schlauchanschlussanordnung nach Figur 1,
- Fig. 10: eine Draufsicht auf eine weitere Halteplatte in Ringform für eine Schlauchanschlussanordnung nach Figur 1,
- Fig. 11: die Halteplatte aus Figur 10 mit eingesetzten Schläuchen,
- Fig. 12: eine dreidimensionale Schrägansicht auf die Halteplatte mit Schläuchen gemäß Figur 11,
- Fig. 13: eine Ansicht auf die Einlaufseite einer weiteren Schlauchanschlussanordnung,
- Fig. 14: einen Längsschnitt entlang der Schnittebene aus Figur 13,
- Fig. 15: eine Ansicht auf die Einlaufseite einer weiteren Schlauchanschlussanordnung und
- Fig. 16: einen Längsschnitt entlang der Schnittebene aus Figur 15.

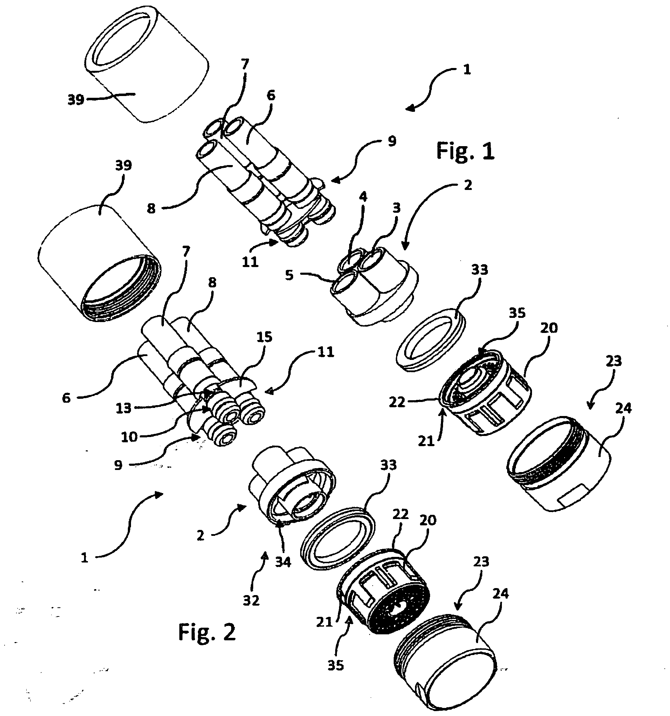

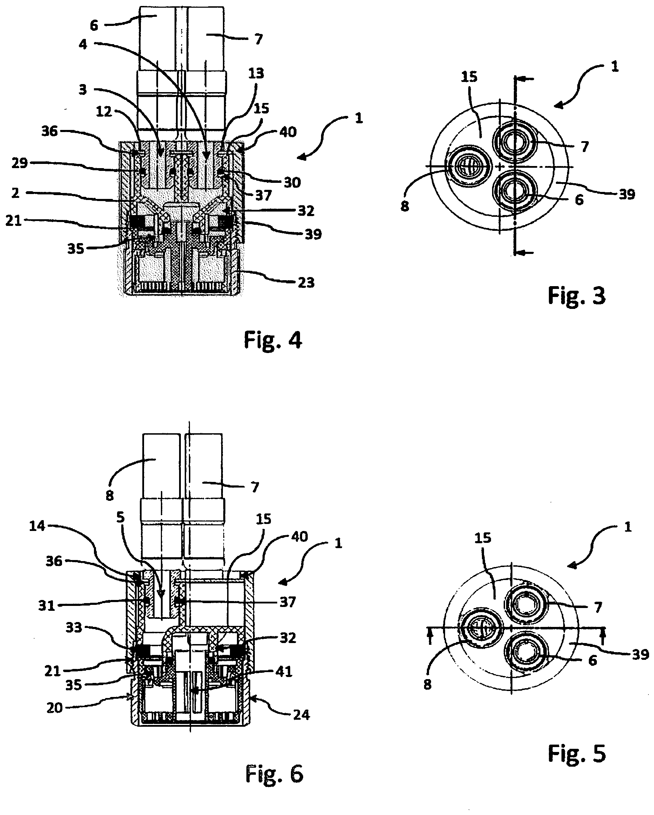

Die Figuren 1 bis 9 zeigen unterschiedliche Ansichten einer erfindungsgemäßen Schlauchanschlussanordnung 1 und werden im Folgenden gemeinsam beschrieben.

Die Schlauchanschlussanordnung 1 hat einen Grundkörper 2, an dem drei Schlauchaufnahmen 3, 4, 5 ausgebildet sind.

In jede Schlauchaufnahme 3, 4, 5 ist ein Schlauch 6, 7, 8 mit einem jeweiligen Ende 9, 10, 11 gesteckt.

Bei weiteren Ausführungsbeispielen sind zwei oder mehr als drei Schlauchaufnahmen und Schläuche vorhanden.

An jedem der Schläuche 6, 7, 8 in den Figuren 1 bis 9 ist im Bereich des jeweiligen Endes 9, 10, 11 eine Haltekante 12, 13, 14 in Form einer umlaufenden Schulter ausgebildet, mit der der jeweilige Schlauch 6, 7, 8 an einer Halteplatte 15 gehalten wird.

Hierzu sind an der Halteplatte 15 drei Ausnehmungen 16, 17, 18 ausgebildet, die in Position und Größe zu den Schlauchaufnahmen 12, 13, 14 und einem Außendurchmesser der Enden 9, 10, 11 und der Haltekanten 12, 13, 14 korrespondieren, so dass die Haltekanten 12, 13, 14 die Halteplatte 15 übergreifen.

Diese Ausnehmungen 16, 17, 18 sind in einer durch die Halteplatte 15 ausgezeichneten Ebene nach außen orientiert, sodass die Enden 9, 10, 11 durch eine jeweils quer zu einer Längsrichtung der Schläuche 6, 7, 8 oder seitlich ausgerichtete, in der Ebene verlaufende Einsetzbewegung 19 in die zugehörige Ausnehmung 16, 17, 18 eingesetzt werden können und im Gebrauch eingesetzt sind. Hierdurch ergibt sich die axial oder in Längsrichtung fixierende Funktion der Haltekante 12, 13, 14.

Anschließend werden die Enden 9, 10, 11 in die zugehörigen Schlauchaufnahmen 3, 4, 5 gesteckt, und die Halteplatte 15 verhindert ein Abziehen der Schläuche 6, 7, 8 aus der jeweiligen Schlauchaufnahme 3, 4, 5.

An dem Grundkörper 2 ist abströmseitig, also auf einer gegenüberliegenden Seite in Bezug auf die Schlauchaufnahmen 3, 4, 5, ein Mündungsteil 20 angesetzt.

An diesem Mündungsteil 20 ist ein Anschlag 21 ausgebildet, beispielsweise als umlaufende Schulter 22.

Dieser Anschlag 21 ist so an dem Mündungsteil 20 positioniert, dass der Grundkörper 2 an die Halteplatte 15 gepresst wird, wenn das Mündungsteil 20 an den Grundkörper 2 angesetzt, die Halteplatte 15 von außen - beispielsweise durch ein Widerlager - abgestützt und auf den Anschlag 21 eine in Längsrichtung oder zur Halteplatte 15 hin gerichtete Kraft eingebracht wird.

Die Schlauchanschlussanordnung 1 hat weiter eine Schraubhülse 23, die in Gebrauchsposition den Anschlag 21 beaufschlagt und die erwähnte Kraft erzeugt.

Bei weiteren Ausführungsbeispielen ist der Grundkörper 2 oder das Mündungsteil 20 mithilfe einer nicht-geschraubten Verbindung, beispielsweise einer Schnapp-, Renk- oder Rastverbindung, befestigt und gegen die Halteplatte 15 gepresst.

Im Ausführungsbeispiel nach den Figuren 1 bis 9 ist die Schraubhülse 23 als Auslaufmundstück 24 mit einem Standardmaß der Sanitärtechnik ausgebildet.

Dieses Auslaufmundstück 24 ist auf das Mündungsteil 20 derart aufgesetzt, dass es das Mündungsteil 20 aufnimmt und dass es an dem Anschlag 21 anliegt.

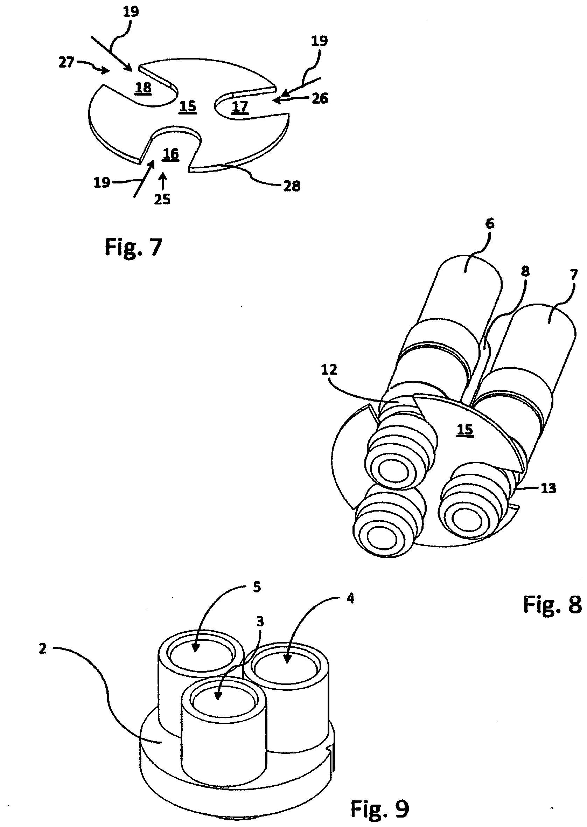

In Figur 7 ist erkennbar, dass die Ausnehmungen 16, 17, 18 mit ihren Öffnungen 25, 26, 27 voneinander weg radial nach außen weisen. Die Einsteckbewegung 19 ist somit von außen nach innen gerichtet.

Im Übrigen formt die Halteplatte 15 eine Umfangskontur 28, an welcher die Öffnungen 25, 26, 27 gleichverteilt und beabstandet voneinander nach außen münden.

An jedem Schlauch 6, 7, 8 ist im Bereich des jeweiligen Endes 9, 10, 11 ein Dichtring 29, 30, 31 angeordnet. Die Dichtringe 29, 30, 31 liegen in Gebrauchsstellung zwischen dem jeweiligen Schlauch 6, 7, 8 und dem Grundkörper 2 in der jeweiligen Schlauchaufnahme 3, 4, 5. Sie dichten den Anschluss des jeweiligen Schlauchs 6, 7, 8 an dem Grundkörper 2 ab.

Das Mündungsteil 20 und der Grundkörper 2 schließen eine komplexe Innengeometrie 32 ein, welche durch einen Dichtring 33 nach außen abgeschlossen ist.

Aus den Figuren 1 bis 9 ist erkennbar, dass die Schlauchaufnahmen 3, 4, 5 im Wesentlichen punktförmig sind. Der Grundkörper 2 hat ein System von inneren Verbindungsleitungen, die hier nicht weiter dargestellt sind. Diese Verbindungsleitungen führen die Schlauchaufnahme 5 auf eine Abgabeöffnung 34, die demgegenüber ringförmig ist. Somit ist die Abgabeöffnung 34 flüssigkeitsführend mit der Schlauchaufnahme 5 verbunden.

Im Mündungsteil 20 ist eine Strahlformer- und/oder Strahlreglereinheit 35 ausgebildet, die von der Abgabeöffnung 34 mit Flüssigkeit beschickt wird.

Die Schlauchaufnahmen 3 und 4 sind dagegen als ein Bypass 41 an der Strahlformer- und/oder Strahlreglereinheit 35 vorbeigeführt und mündet unbehindert nach außen als zentraler, vereinigter Strahl.

Die Haltekanten 12, 13, 14 sind jeweils als seitliche Begrenzungen einer Haltenut 36 ausgebildet, um so die Enden 9, 10, 11 in beide axiale Richtungen zu fixieren.

In den Figuren 1 bis 9 ist noch erkennbar, dass die Dichtringe 29, 30, 31 jeweils in einer Aufnahmenut 37 angeordnet sind.

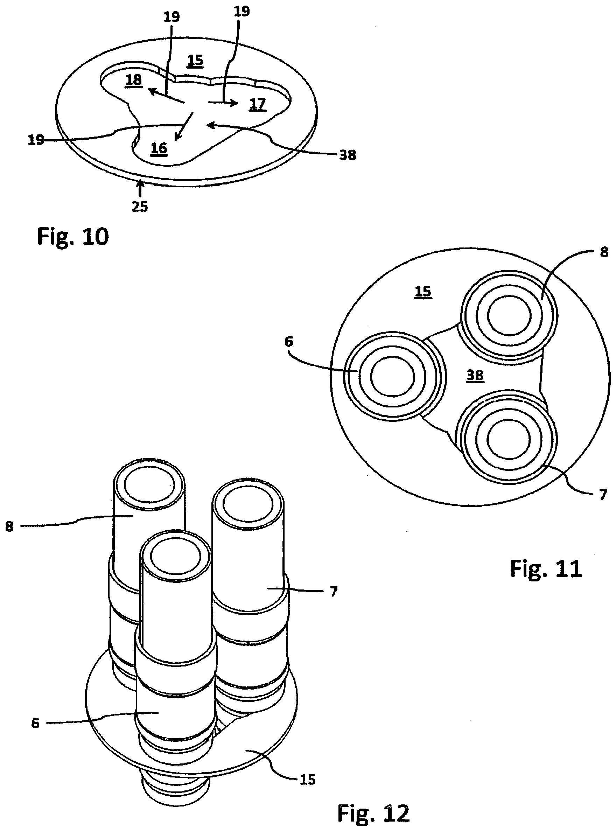

Die Figuren 10 bis 12 zeigen eine weitere Halteplatte 15, die statt der Halteplatte 15, wie sie in den Figuren 1 bis 9 dargestellt ist, bei der beschriebenen Schlauchanschlussanordnung 1 einsetzbar ist. Funktionell oder konstruktiv zu den vorangehenden Ausführungsbeispielen gleichartige oder identische Bauteile oder Funktionseinheiten sind mit denselben Bezugszeichen bezeichnet und nicht noch einmal gesondert beschrieben. Die Ausführungen zu den Figuren 1 bis 9 gelten daher zu den Figuren 10 bis 12 entsprechend.

Das Ausführungsbeispiel nach den Figuren 10 bis 12 unterscheidet sich von den vorangegangenen Ausführungsbeispielen zumindest dadurch, dass die Ausnehmungen 16, 17, 18 in eine gemeinsame zentrale Durchstecköffnung 38 der Halteplatte 15 nach innen münden.

Die Halteplatte 15 fasst die Durchstecköffnung 38 somit ringförmig umlaufend ein.

Bei diesem Ausführungsbeispiel sind die Schläuche 6, 7, 8 in einer seitlich und von innen nach außen geführten Einsetzbewegung 19 in die Ausnehmungen 16, 17, 18 einsetzbar.

Bei weiteren Ausführungsbeispielen weist die Halteplatte ein System von nach außen geöffneten Ausnehmungen und nach innen geöffneten Ausnehmungen auf.

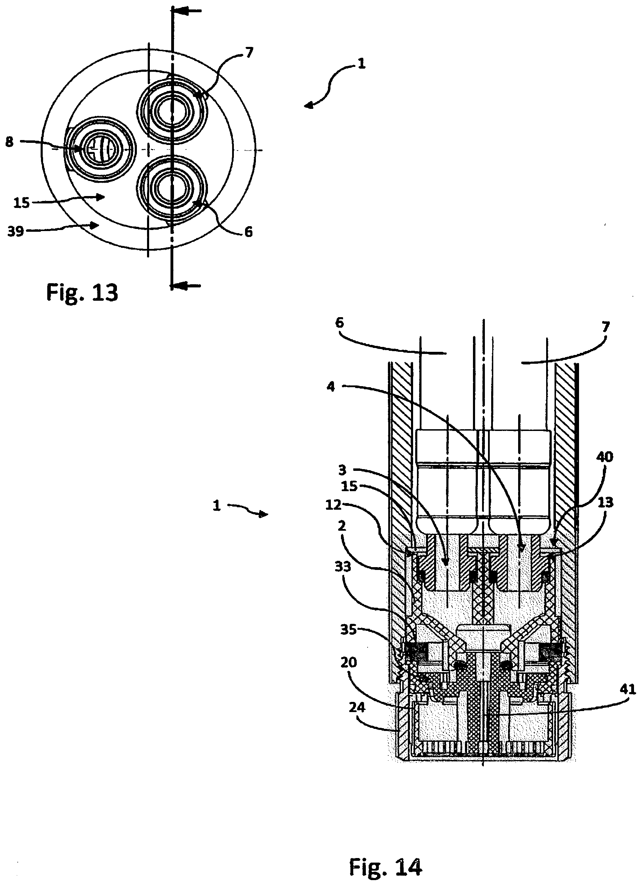

Die Figuren 13 und 14 zeigen eine weitere erfindungsgemäße Schlauchanschlussanordnung 1. Funktionell oder konstruktiv zu den vorangehenden Ausführungsbeispielen gleichartige oder identische Bauteile oder Funktionseinheiten sind mit denselben Bezugszeichen bezeichnet und nicht noch einmal gesondert beschrieben. Die Ausführungen zu den Figuren 1 bis 12 gelten daher zu den Figuren 13 und 14 entsprechend.

Das Ausführungsbeispiel gemäß den Figuren 13 und 14 unterscheidet sich von den vorangegangenen Ausführungsbeispielen zumindest dadurch, dass die Halteplatte 15 von den Schläuchen 6, 7, 8 nur einseitig gehalten ist. Die Haltekante 14 ist somit nicht zu einer Haltenut zusammengesetzt.

Die Haltekante 14 ist in Gebrauchsstellung zwischen der Halteplatte 15 und dem Grundkörper 2 angeordnet und übergreift die Halteplatte 15, um ein Herausziehen des jeweiligen Schlauches 6, 7, 8 zu verhindern.

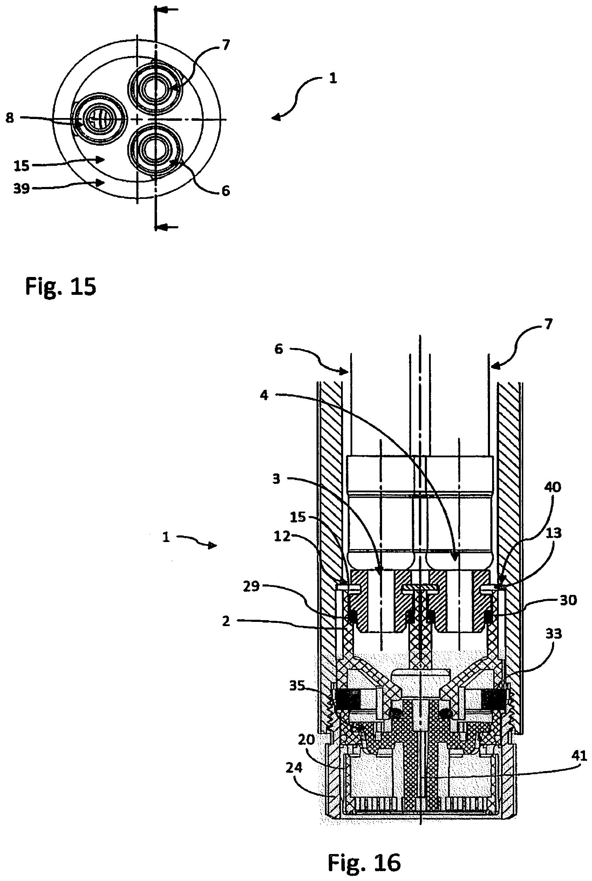

Die Figuren 15 und 16 zeigen eine weitere erfindungsgemäße Schlauchanschlussanordnung 1. Funktionell oder konstruktiv zu den vorangehenden Ausführungsbeispielen gleichartige oder identische Bauteile oder Funktionseinheiten sind mit denselben Bezugszeichen bezeichnet und nicht noch einmal gesondert beschrieben. Die Ausführungen zu den Figuren 1 bis 14 gelten daher zu den Figuren 15 und 16 entsprechend.

Das Ausführungsbeispiel gemäß den Figuren 13 und 14 unterscheidet sich von den vorangegangenen Ausführungsbeispielen zumindest dadurch, dass die Dichtringe 29, 30, 31 nicht in einer Aufnahmenut, sondern einseitig an der jeweiligen Schlauchaufnahme 3, 4, 5 und dem jeweiligen Ende 9, 10, 11 gehalten sind. Die Dichtringe 29, 30, 31 können somit zu Montage entweder auf das Ende 9, 10, 11 aufgesteckt oder in die Schlauchaufnahme 3, 4, 5 eingelegt werden, bevor der jeweilige Schlauch eingesteckt wird.

Zum Gebrauch wird die Schlauchanschlussanordnung 1 im Fall der Verwendung an einem Armaturenauslauf 39 einer Sanitärarmatur wie folgt zusammengesetzt.

Zunächst werden die Schläuche 6, 7, 8 in die Halteplatte 15 seitlich eingesetzt.

Nun werden die Schläuche 6, 7, 8 anschließend in die jeweilige Schlauchaufnahme 9, 10, 11 eingeführt.

Nun wird der Grundkörper 2 mit den Schläuchen 6, 7, 8 voran in den Armaturenauslauf 39 der Sanitärarmatur (nicht weiter dargestellt) eingesetzt.

Nun wird die Halteplatte 15 mit einem Auslaufmundstück 24 befestigt, wobei dieses an dem Anschlag 21 angreift. Hierbei wird die Halteplatte 15 gegen eine im Armaturenauslauf 39 ausgebildete Abstützung 40 gepresst.

Die erfindungsgemäße Schlauchanschlussanordnung 1 ist auch bei weiteren Ausführungsbeispielen zum Anschluss von Schläuchen an ein Mischventil oder eine Mischkartusche oder ein sonstiges Ventil oder eine sonstige Sanitärkartusche verwendbar.

Bei einer Schlauchanschlussanordnung 1 wird vorgeschlagen, eine Halteplatte 15 zur axialen Fixierung von wenigstens zwei Schläuchen 6, 7, 8 in korrespondierenden Schlauchaufnahmen 3, 4, 5 zu verwenden, wobei die Schläuche 6, 7, 8 durch eine seitliche Einsetzbewegung 19 in entsprechende Ausnehmungen16, 17, 18 der Halteplatte 15 einsetzbar sind, wo sie die Ausnehmungen 16, 17, 18 hintergreifen.

### Bezugszeichenliste

- 1: Schlauchanschlussanordnung
- 2: Grundkörper
- 3: Schlauchaufnahme
- 4: Schlauchaufnahme
- 5: Schlauchaufnahme
- 6: Schlauch
- 7: Schlauch
- 8: Schlauch
- 9: Ende
- 10: Ende
- 11: Ende
- 12: Haltekante
- 13: Haltekante
- 14: Haltekante
- 15: Halteplatte
- 16: Ausnehmung
- 17: Ausnehmung
- 18: Ausnehmung
- 19: Einsetzbewegung
- 20: Mündungsteil
- 21: Anschlag
- 22: Schulter
- 23: Schraubhülse
- 24: Auslaufmundstück
- 25: Öffnung
- 26: Öffnung
- 27: Öffnung
- 28: Umfangskontur
- 29: Dichtring
- 30: Dichtring
- 31: Dichtring
- 32: Innengeometrie
- 33: Dichtring
- 34: Abgabeöffnung
- 35: Strahlformer- und/oder Strahlreglereinheit
- 36: Haltenut
- 37: Aufnahmenut
- 38: Durchstecköffnung
- 39: Armaturenauslauf
- 40: Abstützung
- 41: Bypass

## Patentansprüche

1. Schlauchanschlussanordnung (1),mit einem Mündungsteil (20), mit einem Grundkörper (2), an welchem wenigstens zwei Schlauchaufnahmen (3, 4, 5) ausgebildet sind, mit wenigstens zwei Schläuchen (6, 7, 8), die mit ihren jeweiligen Enden (9, 10, 11) in jeweils eine der wenigstens zwei Schlauchaufnahmen (3, 4, 5) gesteckt sind, wobei an jedem der wenigstens zwei Schläuche (6, 7, 8) eine Haltekante (12, 13, 14) ausgebildet ist, mit einer Halteplatte (15), in welcher korrespondierend zu den wenigstens zwei Schlauchaufnahmen (3, 4, 5) wenigstens zwei Ausnehmungen (16, 17, 18) ausgebildet sind, in welche jeweils einer der wenigstens zwei Schläuche (6, 7, 8) durch eine quer zu einer Längsrichtung des jeweiligen Schlauchs (6, 7, 8) ausgerichtete Einsetzbewegung (19) einsetzbar ist, so dass die zugehörige Haltekante (12, 13, 14) die Halteplatte (15) übergreift, um ein Abziehen der Schläuche (6, 7, 8) aus den Schlauchaufnahmen (3, 4, 5) zu verhindern, **dadurch gekennzeichnet, dass** an dem an dem Grundkörper (2) abströmseitig angesetzten Mündungsteil (20) ein Anschlag (21) ausgebildet ist, mittels welchem der Grundkörper (2) mit einer Schraubhülse (23) gegen die durch ein Widerlager abstützbare oder in Gebrauchsstellung von außen abgestützte Halteplatte (15) pressbar ist.

2. Schlauchanschlussanordnung (1) nach Anspruch 1, **dadurch gekennzeichnet, dass** der Anschlag (21) als umlaufende Schulter (22) ausgebildet ist.

3. Schlauchanschlussanordnung (1) nach Anspruch 1, insbesondere nach einem der vorangehenden Ansprüche, **dadurch gekennzeichnet, dass** in dem Grundkörper (2) eine dritte Schlauchaufnahme (3, 4, 5) ausgebildet ist, dass ein dritter Schlauch (6, 7, 8) mit seinem Ende (9, 10, 11) in die dritte Schlauchaufnahme (3, 4, 5) gesteckt ist, dass an dem dritten Schlauch (6, 7, 8) eine Haltekante (12, 13, 14) ausgebildet ist, dass in der Halteplatte (15) korrespondierend zu der dritten Schlauchaufnahme (3, 4, 5) eine Ausnehmung (16, 17, 18) ausgebildet ist, in welche der dritte Schlauch durch eine quer zu einer Längsrichtung des dritten Schlauchs (6, 7, 8) ausgerichtete Einsetzbewegung (19) einsetzbar ist, so dass die zugehörige Haltekante (12, 13, 14) die Halteplatte (15) übergreift, um ein Abziehen des Schlauchs (6, 7, 8) aus der Schlauchaufnahme (3, 4, 5) zu verhindern.

4. Schlauchanschlussanordnung (1) nach einem der vorangehenden Ansprüche, **dadurch gekennzeichnet, dass** die Schraubhülse (23) als Auslaufmundstück (24) ausgebildet ist.

5. Schlauchanschlussanordnung (1) nach einem der vorangehenden Ansprüche, **dadurch gekennzeichnet, dass** das oder ein Auslaufmundstück (24) auf das Mündungsteil (20) aufgesetzt ist, welches an dem Anschlag (21) anliegt.

6. Schlauchanschlussanordnung (1) nach einem der vorangehenden Ansprüche, **dadurch gekennzeichnet, dass** die wenigstens zwei Ausnehmungen (16, 17, 18) mit ihren Öffnungen (25, 26, 27) voneinander weg weisen, insbesondere wobei die Öffnungen (25, 26, 27) beabstandet voneinander an einer Umfangskontur (28) der Halteplatte (15) nach außen münden.

7. Schlauchanschlussanordnung (1) nach einem der Ansprüche 1 bis 5, **dadurch gekennzeichnet, dass** die wenigstens zwei Ausnehmungen (16, 17, 18) in eine gemeinsame zentrale Durchstecköffnung (38) der Halteplatte (15) münden, insbesondere wobei die Halteplatte (15) die Durchstecköffnung (38) ringförmig umlaufend einfasst.

8. Schlauchanschlussanordnung (1)nach einem der vorangehenden Ansprüche 1 bis 6, **dadurch gekennzeichnet, dass** an jedem der wenigstens zwei Schläuche (6, 7, 8) und/oder in jeder der wenigstens zwei Schlauchaufnahmen (3, 4, 5) ein Dichtring (29, 30, 31) angeordnet ist, welcher den jeweiligen Schlauch (6, 7, 8) in der jeweiligen Schlauchaufnahme (3, 4, 5) abdichtet.

9. Schlauchanschlussanordnung (1) nach einem der vorangehenden Ansprüche, **dadurch gekennzeichnet, dass** die Haltekanten (12, 13, 14) jeweils als Teil einer umlaufenden Haltenut (36) ausgebildet sind.

10. Schlauchanschlussanordnung (1) nach einem der vorangehenden Ansprüche, **dadurch gekennzeichnet, dass** zwischen dem Mündungsteil (20) und dem Grundkörper (2) ein Dichtring 33 angeordnet ist.

11. Schlauchanschlussanordnung (1) nach einem der vorangehenden Ansprüche, **dadurch gekennzeichnet, dass** der Grundkörper (2) wenigstens eine im Wesentlichen punktförmige Schlauchaufnahme (3, 4, 5) mit einer ringförmigen oder C-förmigen Abgabeöffnung (34) auf seiner von den wenigstens zwei, vorzugsweise drei, Schlauchaufnahmen (3, 4, 5) abgewandten Seite flüssigkeitsführend verbindet.

12. Schlauchanschlussanordnung (1) nach einem der vorangehenden Ansprüche, **dadurch gekennzeichnet, dass** der Grundkörper (2) wenigstens eine der wenigstens zwei, vorzugsweise drei, Schlauchaufnahmen (3, 4, 5) mit einer Abgabeöffnung (34) auf seiner von den wenigstens zwei Schlauchaufnahmen (3, 4, 5) abgewandten Seite flüssigkeitsführend verbindet.

13. Schlauchanschlussanordnung nach einem der vorangehenden Ansprüche, **dadurch gekennzeichnet, dass** das Mündungsteil (20) als Strahlformer- und/oder Strahlreglereinheit (35) ausgebildet ist, insbesondere wobei wenigstens eine, vorzugsweise zwei, der wenigstens zwei Schlauchaufnahmen (3, 4, 5) im Grundkörper (2) auf einen Bypass (41) geführt ist.

14. Verwendung einer Schlauchanschlussanordnung (1) nach einem der Ansprüche 1 bis 6 oder 8 bis 13 bei einer Sanitärarmatur, **dadurch gekennzeichnet, dass** die wenigstens zwei Schläuche (6, 7, 8) in die Halteplatte (15) seitlich eingesetzt werden, dass die wenigstens zwei Schläuche (6, 7, 8) anschließend in die jeweilige Schlauchaufnahme (3, 4, 5) eingeführt werden, dass der Grundkörper (2) in einen Armaturenauslauf der Sanitärarmatur eingesetzt wird, wobei mittels des Grundkörpers (2) über einen Anschlag (21) an einem vom Grundkörper (2) abströmseitig angesetzten Mündungsteil (20) mit einem an dem Anschlag (21) angreifenden Auslaufmundstück (24) die Halteplatte (15) gegen eine im Armaturenauslauf (39) ausgebildete Abstützung (40) gepresst wird.

15. Verwendung nach Anspruch 14, **dadurch gekennzeichnet**, oder dass die Abstützung (40) durch ein Einsetzteil, insbesondere einen Sprengring, gebildet ist.

16. Verwendung nach einem der Ansprüche 14 oder 15, **dadurch gekennzeichnet, dass** das Auslaufmundstück (24) das Mündungsteil (20) gegen den Grundkörper (2) presst und/oder mit dem Armaturenauslauf (39) verschraubt wird.

17. Verwendung nach einem der Ansprüche 14 bis 16, **dadurch gekennzeichnet, dass** die Halteplatte (15) drei Ausnehmungen (16, 17, 18) aufweist, in welche jeweils ein Schlauch (6, 7, 8) durch eine quer zu einer Längsrichtung des jeweiligen Schlauchs (6, 7, 8) ausgerichtete Einsetzbewegung (19) eingesetzt wird und wobei anschließend die Schläuche (6, 7, 8) in einen Grundkörper (2), an welchem drei korrespondierende Schlauchaufnahmen (3, 4, 5) ausgebildet sind, eingesetzt werden.

18. Sanitärarmatur, die durch eine Verwendung nach einem der Ansprüche 14 bis 17 gebildet ist und/oder die an einem Armaturenauslauf (39) eine Schlauchanschlussanordnung; (1) nach einem der Ansprüche 1 bis 13 aufweist.

## Claims

1. Hose connector assembly (1) having a mouth part (20), having a main body (2) on which at least two hose receptacles (3, 4, 5) are configured, having at least two hoses (6, 7, 8) which by way of the respective ends (9, 10, 11) thereof are plug-fitted in each case into one of the at least two hose receptacles (3, 4, 5), wherein one retaining edge (12, 13, 14) is configured on each of the at least two hoses (6, 7, 8), having a retaining plate (15) in which in a manner corresponding to the at least two hose receptacles (3, 4, 5) at least two receptacles (16, 17, 18) into which in each case one of the at least two hoses (6, 7, 8) by way of an insertion movement (19) that is aligned so as to be transverse to a longitudinal direction of the respective hose (6, 7, 8) is insertable are configured, such that the associated retaining edge (12, 13, 14) engages across the retaining plate (15) in order to prevent the hoses (6, 7, 8) being pulled out of the hose receptacles (3, 4, 5), **characterized in that** a detent (21) by means of which the main body (2) by way of a screw sleeve (23) is capable of being pressed against the retaining plate (15), which is supportable by way of an abutment or in a usage position is externally supported, is configured on the mouth part (20) that is attached to the main body (2) on the downstream side.

2. Hose connector assembly (1) according to Claim 1, **characterized in that** the detent (21) is configured as an encircling shoulder (22).

3. Hose connector assembly (1) according to Claim 1, in particular according to one of the preceding claims, **characterized in that** a third hose receptacle (3, 4, 5) is configured in the main body (2), **in that** a third hose (6, 7, 8) by way of the end (9, 10, 11) thereof is plug-fitted into the third hose receptacle (3, 4, 5), **in that** a retaining edge (12, 13, 14) is configured on the third hose (6, 7, 8), **in that** in a manner corresponding to the third hose receptacle (3, 4, 5) a receptacle (16, 17, 18) into which the third hose by way of an insertion movement (19) that is aligned so as to be transverse to a longitudinal direction of the third hose (6, 7, 8) is insertable is configured in the retaining plate (15), such that the associated retaining edge (12, 13, 14) engages across the retaining plate (15) in order to prevent the hose (6, 7, 8) being pulled out of the hose receptacle (3, 4, 5) .

4. Hose connector assembly (1) according to one of the preceding claims, **characterized in that** the screw sleeve (23) is configured as an outlet mouthpiece (24).

5. Hose connector assembly (1) according to one of the preceding claims, **characterized in that** the or an outlet mouthpiece (24) is pushed fitted onto the mouth part (20) that bears on the detent (21).

6. Hose connector assembly (1) according to one of the preceding claims, **characterized in that** the at least two recesses (16, 17, 18) by way of the openings (25, 26, 27) thereof point away from one another, in particular **characterized in that** the openings (25, 26, 27) in a mutually spaced-apart manner open outwardly on a circumferential contour (28) of the retaining plate (15) .

7. Hose connector assembly (1) according to one of Claims 1 to 5, **characterized in that** the at least two recesses (16, 17, 18) open into a common central plug-fitting opening (38) of the retaining plate (15), in particular wherein the retaining plate (15) borders the plug-fitting opening (38) in an annular encircling manner.

8. Hose connector assembly (1) according to one of the preceding Claims 1 to 6, **characterized in that** an annular seal (29, 30, 31) which seals the respective hose (6, 7, 8) in the respective hose receptacle (3, 4, 5) is disposed on each of the at least two hoses (6, 7, 8) and/or in each of the at least two hose receptacles (3, 4, 5).

9. Hose connector assembly (1) according to one of the preceding claims, **characterized in that** the retaining edges (12, 13, 14) are in each case configured as part of an encircling retaining groove (36) .

10. Hose connector assembly (1) according to one of the preceding claims, **characterized in that** an annular seal (33) is disposed between the mouth part (20) and the main body (2).

11. Hose connector assembly (1) according to one of the preceding claims, **characterized in that** the main body (2) connects in a liquid-conducting manner at least one substantially punctiform hose receptacle (3, 4, 5) to an annular or C-shaped dispensing opening (34) on that side of said main body (2) that faces away from the at least two, preferably three, hose receptacles (3, 4, 5) .

12. Hose connector assembly (1) according to one of the preceding claims, **characterized in that** the main body (2) connects in a liquid-conducting manner at least one of the at least two, preferably three, hose receptacles (3, 4, 5) to a dispensing opening (34) on that side of said main body (2) that faces away from the at least two hose receptacles (3, 4, 5).

13. Hose connector assembly according to one of the preceding claims, **characterized in that** the mouth part (20) is configured as a jet former and/or jet regulator unit (35), in particular wherein at least one, preferably two, of the at least two hose receptacles (3, 4, 5) in the main body (2) is routed to a bypass (41) .

14. Use of a hose connector assembly (1) according to one of Claims 1 to 6 or 8 to 13 in a sanitary fitting, **characterized in that** the at least two hoses (6, 7, 8) are inserted laterally into the retaining plate (15), **in that** the at least two hoses (6, 7, 8) are subsequently introduced into the respective hose receptacle (3, 4, 5), **in that** the main body (2) is inserted into a fitting outlet of the sanitary fitting, wherein by means of the main body (2) via a detent (21) on a mouth part (20) that is attached by the main body (2) on the downstream side the retaining plate (15) by way of an outlet mouthpiece (24) that engages on the detent (21) is pressed against a support (40) that is configured in the fitting outlet (39).

15. Use according to Claim 14, **characterized in that** the support (40) is formed by an insert part, in particular by a snap ring.

16. Use according to either of Claims 14 and 15, **characterized in that** the outlet mouthpiece (24) presses the mouth part (20) against the main body (2) and/or is screw-fitted to the fitting outlet (39).

17. Use according to one of Claims 14 to 16, **characterized in that** the retaining plate (15) has three recesses (16, 17, 18) into which in each case one hose (6, 7, 8) by way of an insertion movement (19) that is aligned so as to be transverse to a longitudinal direction of the respective hose (6, 7, 8) is inserted, and wherein the hoses (6, 7, 8) are subsequently inserted into a main body (2) on which three corresponding hose receptacles (3, 4, 5) are configured.

18. Sanitary fitting which is formed by a use according to one of Claims 14 to 17 and/or which on a fitting outlet (39) has a hose connector assembly (1) according to one of Claims 1 to 13.

## Revendications

1. Dispositif de raccord de tuyau (1), comportant un élément d'embouchure (20), un corps de base (2) sur lequel sont formés au moins deux logements de tuyau (3, 4, 5), au moins deux tuyaux (6, 7, 8) qui sont insérés, par leurs extrémités (9, 10, 11) respectives, respectivement dans l'un desdits au moins deux logements de tuyau (3, 4, 5), un bord de retenue (12, 13, 14) étant formé sur chacun desdits au moins deux tuyaux (6, 7, 8), une plaque de retenue (15) dans laquelle sont formés au moins deux évidements (16, 17, 18) correspondant auxdits au moins deux logements de tuyau (3, 4, 5), évidements dans lesquels l'un desdits au moins deux tuyaux (6, 7, 8) peut être inséré par un mouvement d'insertion (19) orienté transversalement à la direction longitudinale du tuyau concerné, de telle sorte que le bord de retenue (12, 13, 14) correspondant chevauche la plaque de retenue (15) pour empêcher que les tuyaux (6, 7, 8) ne se retirent des logements de tuyau (3, 4, 5), **caractérisé en ce qu'**une butée (21) est formée sur l'élément d'embouchure (20) situé du côté aval du corps de base (2), butée au moyen de laquelle le corps de base (2) peut être pressé, à l'aide d'une douille filetée (23), contre la plaque de retenue (15) qui peut être mise en appui par une contre-butée ou qui est mise en appui depuis l'extérieur en position d'utilisation.

2. Dispositif de raccord de tuyau (1) selon la revendication 1, **caractérisé en ce que** la butée (21) est réalisée sous la forme d'un épaulement périphérique (22).

3. Dispositif de raccord de tuyau (1) selon la revendication 1, en particulier selon l'une quelconque des revendications précédentes, **caractérisé en ce qu'**un troisième logement de tuyau (3, 4, 5) est formé dans le corps de base (2), **en ce qu'**un troisième tuyau (6, 7, 8) est inséré par son extrémité (9, 10, 11) dans le troisième logement de tuyau (6, 7, 8), **en ce qu'**un bord de retenue (12, 13, 14) est formé sur le troisième tuyau (6, 7, 8), et **en ce que**, dans la plaque de retenue (15), est formé un évidement (16, 17, 18) correspondant au troisième logement de tuyau (3, 4, 5), logement de tuyau dans lequel le troisième tuyau peut être inséré par un mouvement d'insertion (19) orienté transversalement à la direction longitudinale du troisième tuyau (6, 7, 8), de telle sorte que le bord de retenue (12, 13, 14) correspondant chevauche la plaque de retenue (15) dans le but d'empêcher que le tuyau (6, 7, 8) se retire du logement de tuyau (3, 4, 5).

4. Dispositif de raccord de tuyau (1) selon l'une quelconque des revendications précédentes, **caractérisé en ce que** la douille filetée (23) est réalisée sous la forme d'un embout de sortie (24).

5. Dispositif de raccord de tuyau (1) selon l'une quelconque des revendications précédentes, **caractérisé en ce que** le ou un embout de sortie (24) est monté sur l'élément d'embouchure (20), ledit embout de sortie venant en appui contre la butée (21).

6. Dispositif de raccord de tuyau (1) selon l'une quelconque des revendications précédentes, **caractérisé en ce que** lesdits au moins deux évidements (16, 17, 18) sont par leurs ouvertures (25, 26, 27) situés à une certaine distance l'un de l'autre, les ouvertures (25, 26, 27) débouchant en particulier vers l'extérieur en se trouvant à distance les unes des autres sur un contour périphérique (28) de la plaque de retenue (15).

7. Dispositif de raccord de tuyau (1) selon l'une quelconque des revendications 1 à 5, **caractérisé en ce que** lesdits au moins deux évidements (16, 17, 18) débouchent dans une ouverture de passage (38) centrale commune de la plaque de retenue (15), la plaque de retenue (15) entourant en particulier l'ouverture de passage (38) de manière périphérique en formant un anneau.

8. Dispositif de raccord de tuyau (1) selon l'une quelconque des revendications précédentes 1 à 6, **caractérisé en ce que**, sur chacun desdits au moins deux tuyaux (6, 7, 8) et/ou dans chacun desdits au moins deux logements de tuyau (3, 4, 5), est disposée une bague d'étanchéité (29, 30, 31) qui rend étanche le tuyau respectif (6, 7, 8) dans le logement de tuyau (3, 4, 5) concerné.

9. Dispositif de raccord de tuyau (1) selon l'une quelconque des revendications précédentes, **caractérisé en ce que** les bords de retenue (12, 13, 14) sont respectivement formés en tant que partie d'une rainure de retenue (36) périphérique.

10. Dispositif de raccord de tuyau (1) selon l'une quelconque des revendications précédentes, **caractérisé en ce qu'**une bague d'étanchéité (33) est disposée entre l'élément d'embouchure (20) et le corps de base (2).

11. Dispositif de raccord de tuyau (1) selon l'une quelconque des revendications précédentes, **caractérisé en ce que** le corps de base (2) relie, d'une manière permettant le transport de liquide, au moins un logement de tuyau (3, 4, 5) sensiblement ponctuel à une ouverture d'évacuation (34) annulaire ou en forme de C sur son côté opposé auxdits au moins deux, de préférence trois logements de tuyau (3, 4, 5).

12. Dispositif de raccord de tuyau (1) selon l'une quelconque des revendications précédentes, **caractérisé en ce que** le corps de base (2) relie, sur son côté opposé auxdits au moins deux logements de tuyau (3, 4, 5), d'une manière permettant le transport de liquide, au moins l'un desdits au moins deux, de préférence trois logements de tuyau (3, 4, 5) à une ouverture d'évacuation (34).

13. Dispositif de raccord de tuyau selon l'une quelconque des revendications précédentes, **caractérisé en ce que** l'élément d'embouchure (20) est formé en tant qu'unité de formation de jet et/ou en tant qu'unité de régulation de jet, au moins un, de préférence deux desdits au moins deux logements de tuyau (3, 4, 5) étant guidé(s) en particulier dans le corps principal (2) sur une dérivation (41).

14. Utilisation d'un dispositif de raccord de tuyau (1) selon l'une quelconque des revendications 1 à 6 ou 8 à 13 dans une armature sanitaire, **caractérisée en ce que** lesdits au moins deux tuyaux (6, 7, 8) sont insérés latéralement dans la plaque de retenue (15), **en ce que** lesdits au moins deux tuyaux (6, 7, 8) sont ensuite introduits dans le logement de tuyau respectif (3, 4, 5), et **en ce que** le corps de base (2) est inséré dans une sortie d'armature de l'armature sanitaire, la plaque de retenue (15) étant pressée, au moyen du corps de base (2), contre un support (40), en présentant un embout de sortie (24) qui vient en prise avec la butée (21), ledit support étant formé dans la sortie de l'armature (39) par l'intermédiaire d'une butée (21) sur un élément d'embouchure (20) qui est situé du côté aval du corps de base (15).

15. Utilisation selon la revendication 14, **caractérisée en ce que** le support (40) est formé par une pièce à intégrer, en particulier une bague de retenue.

16. Utilisation selon l'une quelconque des revendications 14 ou 15, **caractérisée en ce que** l'embout de sortie (24) presse l'élément d'embouchure (20) contre l'élément de base (2) et/ou est vissé avec la sortie de l'armature (39).

17. Utilisation selon l'une quelconque des revendications 14 à 16, **caractérisée en ce que** la plaque de retenue (15) comporte trois évidements (16, 17, 18), dans chacun desquels un tuyau (6, 7, 8) est respectivement inséré par un mouvement d'insertion (19) orienté transversalement à une direction longitudinale du tuyau (6, 7, 8) concerné, et les tuyaux (6, 7, 8) sont ensuite insérés dans un corps de base (2) sur lequel sont formés trois logements de tuyau (3, 4, 5) correspondants.

18. Armature sanitaire, qui est formée selon l'une quelconque des revendications 14 à 17 et/ou qui présente sur une sortie de l'armature (39) un dispositif de raccord de tuyau (1) selon l'une quelconque des revendications 1 à 13.
